(19) Europäisches Patentamt
European Patent Office
Office européen des brevets

(11) **EP 3 943 570 A1**

(12) **EUROPEAN PATENT APPLICATION**
published in accordance with Art. 153(4) EPC

(43) Date of publication:
**26.01.2022 Bulletin 2022/04**

(21) Application number: **20773732.1**

(22) Date of filing: **16.03.2020**

(51) International Patent Classification (IPC):
**C09K 3/14** (2006.01)  **F16D 69/02** (2006.01)

(52) Cooperative Patent Classification (CPC):
**C09K 3/14; F16D 69/02**

(86) International application number:
**PCT/JP2020/011571**

(87) International publication number:
**WO 2020/189648 (24.09.2020 Gazette 2020/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.03.2019  JP 2019053712**

(71) Applicant: **Akebono Brake Industry Co., Ltd.**
**Tokyo 103-8534 (JP)**

(72) Inventors:
• **TAKADA, Takuya**
**Tokyo 103-8534 (JP)**
• **MIYAJI, Motoyuki**
**Tokyo 103-8534 (JP)**
• **OWA, Kentaro**
**Tokyo 103-8534 (JP)**
• **KIMURA, Kenta**
**Tokyo 103-8534 (JP)**

(74) Representative: **Grünecker Patent- und**
**Rechtsanwälte**
**PartG mbB**
**Leopoldstraße 4**
**80802 München (DE)**

(54) **FRICTION MATERIAL FOR DISC BRAKE**

(57)    The problem addressed by this invention is to provide a friction material for disc brake with which it is possible to curb the occurrence of sticking due to rust, and which has stable friction characteristics even after being left in a low temperature high humidity environment. This invention pertains to a friction material for disc brake which contains a wax having, as a main component thereof, an ester of a higher alcohol and a higher fatty acid.

**EP 3 943 570 A1**

**Description**

TECHNICAL FIELD

The present invention relates to a friction material used for disc brakes of automobiles, railroad vehicles, industrial machines and the like.

BACKGROUND ART

It is known that a phenomenon in which a friction material and a rotor in a brake are stuck to each other by rust due to moisture (hereinafter, may be referred to as "seizure due to corrosion phenomenon") occurs after leaving an automobile in a high humidity environment where dew condensation occurs in the rain or early morning, or after leaving the automobile after washing.

Therefore, various friction materials for preventing rusting that causes the seizure due to corrosion phenomenon have been proposed. For example, Patent Literature 1 discloses a friction material obtained by molding a friction material composition of a NAO material containing a binder, a fiber base material, a friction modifier, a lubricant, a pH adjuster, and a filler, in which the friction material composition contains 2 wt% to 6 wt% (based on a total amount of the friction material composition) of an alkali metal salt and/or alkaline earth metal salt as the pH adjuster, 1 wt% to 7 wt% (based on the total amount of the friction material composition) of fibrilized organic fibers as the fiber base material, and a content of a water-repellent component is 0 wt% to 0.5 wt% based on the total amount of the friction material composition.

In addition, Patent Literature 2 discloses a friction material containing a fiber base material, a friction modifier, and a binder, in which a content of copper is 0.5 mass% or less in terms of a copper element, a content of the binder is 10 mass% or more, calcium hydroxide and zinc are contained, and the pH of the friction material is 11.7 or more.

CITATION LIST

PATENT LITERATURE

[0005]

　　　Patent Literature 1: JP-A-2017-25286
　　　Patent Literature 2: JP-A-2015-93933

SUMMARY OF INVENTION

TECHNICAL PROBLEM

Generally, it is said that the seizure due to corrosion phenomenon is less likely to occur in a disc brake in which moisture is structurally difficult to be retained, as compared with a drum brake.

However, according to the study of the present inventors, a regenerative cooperation brake used in hybrid vehicles and electric vehicles in recent years has a problem that the seizure due to corrosion phenomenon is likely to occur even when a disc brake is used.

A frictional load between the friction material and the rotor in the regenerative cooperation brake is lighter than that of a brake in the related art. Therefore, roughness of the friction material and the rotor surface becomes small, a real contact area becomes large, and an abrasion powder containing an iron component derived from a cast iron rotor, which is a mating material, is difficult to be discharged. It is considered that the above problem occurs since the iron component in the rotor and the abrasion powder rusts and generates an seizure force due to these states and the influence of the moisture.

Due to the seizure due to corrosion phenomenon, when the automobile starts, the rust sticking on a friction surface between the friction material and the rotor is peeled off, impact vibration occurs, the vibration is transmitted to the suspension and the body of the automobile, and abnormal noise may be generated. When the rust sticks severely, the automobile will not be able to start with a creep force.

In addition, when the friction material is left in a relatively low temperature and high humidity environment, the friction surface of the friction material and the abrasion powder absorb moisture and are influence by the moisture, so that a friction coefficient temporarily increases. When the friction coefficient increases, a braking force of the brake becomes too high, causing abnormal effects or squealing.

The present invention has been made in view of the above circumstances, and an object thereof is to provide a friction material for disc brake that can prevent occurrence of a seizure due to corrosion phenomenon and has stable friction characteristics even after being left in a low temperature and high humidity environment.

SOLUTION TO PROBLEM

As a result of intensive studies, the present inventors have invented that the above problem can be solved when the friction material contains a wax containing, as a main component, an ester of a higher fatty acid and a higher alcohol. Thus, the present invention has been completed.
That is, the present invention relates to the following <1> to <3>.

<1> A friction material for disc brake, containing: a wax containing, as a main component, an ester of a higher fatty acid and a higher alcohol.
<2> The friction material for disc brake according to <1>, wherein the wax has a melting point of 65°C to 105°C.
<3> The friction material for disc brake according to <1> or <2>, further containing: a titanate.

ADVANTAGEOUS EFFECTS OF INVENTION

According to the present invention, it is possible to provide a friction material for disc brake that can prevent occurrence of a seizure due to corrosion phenomenon and has stable friction characteristics even after being left in a low temperature and high humidity environment.

DESCRIPTION OF EMBODIMENTS

Hereinafter, the present invention will be described in detail, but these show examples of desirable embodiments, and the present invention is not specified in these contents.
A friction material generally contains a friction modifier, a binder, and a fiber base material.
A friction material for disc brake of the present invention (hereinafter, may be referred to as "friction material of the present invention") contains, as a friction modifier, a wax containing, as a main component, an ester of a higher fatty acid and a higher alcohol.
Hereinafter, each component will be described in detail.

<Friction Modifier>

(Wax containing, as main component, ester of higher fatty acid and higher alcohol)

The friction material of the present invention contains a wax (hereinafter, may be referred to as "wax A") containing, as a main component, an ester of a higher fatty acid and a higher alcohol.
When the friction material has friction against a rotor, which is a mating material, a abrasion powder is generated. When the friction material of the present invention contains the wax A, the wax A softens or melts due to frictional heat generated by friction during braking of the brake, and coats an abrasion powder containing an iron component derived from the rotor and the surface of the rotor. As a result, it is considered that the influence of moisture on the friction surface among particles of the abrasion powder, the friction material and the rotor is prevented, and occurrence of a seizure due to corrosion phenomenon is prevented.
In addition, since the wax A has water repellency, when the friction material of the present invention contains the wax A, moisture absorption of the friction surface of the friction material is prevented, and the abrasion powder is coated with the wax A. Therefore, it is considered that the friction material of the present invention is a friction material having stable friction characteristics even in a low temperature and high humidity environment by preventing a cohesive force of a abrasion powder aggregate from being strengthened due to the influence of the moisture.
The wax A contains, as a main component, an ester (hereinafter, may be referred to as "ester B") of a higher fatty acid and a higher alcohol. In the present invention, the above "main component" means that the content of the ester B in the wax A is 50 mass% or more, preferably 70 mass% or more, and more preferably 80 mass% or more.
The ester B can be obtained from a higher fatty acid and a higher alcohol by known methods. For example, the higher fatty acid and the higher alcohol may be subjected to a dehydration condensation reaction in the presence of a dehydrating agent.
In the present invention, the higher fatty acid means a saturated or unsaturated fatty acid having 10 or more carbon atoms. From the viewpoint of obtaining a wax A having a suitable melting point, the number of carbon atoms is preferably 12 or more, more preferably 14 or more, and is preferably 45 or less, and more preferably 40 or less. The higher fatty acid may be linear, branched or cyclic.
Specific examples of the higher fatty acid include cerotic acid, palmitic acid, behenic acid, lignoceric acid, lauric acid, myristic acid, stearic acid, undecylenic acid, oleic acid, linoleic acid, linolenic acid, arachidonic acid, eicosapentaenoic acid (EPA), and docosahexaenoic acid (DHA). Among these, cerotic acid, palmitic acid, behenic acid, and lignoceric acid are preferred from the viewpoint of coating performance on the abrasion powder and the surface of the rotor.

In the present invention, the higher alcohol means a saturated or unsaturated alcohol having 6 or more carbon atoms. From the viewpoint of obtaining a wax A having a suitable melting point, the number of carbon atoms is preferably 10 or more, more preferably 20 or more, and is preferably 50 or less, and more preferably 40 or less. The higher alcohol may be linear, branched or cyclic.

Specific examples of the higher alcohol include myricyl alcohol, 1-hexacosanol, triacontanol, lauryl alcohol, myristyl alcohol, cetyl alcohol, icosanol, dodecanol, ficeteryl alcohol, zomarin alcohol, oleyl alcohol, gadrail alcohol, icosenol, docosenol, and lanolin alcohol. Among these, myricyl alcohol, 1-hexacosanol, and triacontanol are preferred from the viewpoint of coating performance on the abrasion powder and the surface of the rotor.

Examples of the ester B include a wax ester.

In addition to the ester B, the wax A may contain, for example, a free fatty acid (non-esterified fatty acid), a free alcohol (non-esterified alcohol), a hydrocarbon, a resin, and a lactone.

The number of carbon atoms in the free fatty acid or the free alcohol is, for example, 10 to 40, and preferably 15 to 35. The number of carbon atoms in the hydrocarbon is, for example, 10 to 40, and preferably 15 to 35.

The wax A can be produced by mixing and agitating the above components at, for example, 100°C to 250°C. Further, as the wax A, a naturally derived wax A can be used. Among these, from the viewpoint of reducing the environmental load, it is preferable to use a naturally derived wax A.

Examples of the naturally derived wax A include carnauba wax and rice wax, and a powdered wax A is desirable.

The carnauba wax is obtained from the palm tree of the palm family, which originates in northern Brazil. The rice wax is obtained by refining the wax separated when refining rice oil extracted from rice bran.

The melting point of wax A is preferably 65°C to 105°C, more preferably 75°C to 95°C, and still more preferably 80°C to 90°C. When the melting point of the wax A is 65°C or higher, the material does not have an adverse influence such as adhesion to a wall of a mixer or the like during material mixing and agitating in a process of producing the friction material. In addition, when the melting point of the wax A is 65°C or higher, under braking conditions where a braking load is small due to a regenerative cooperation brake or the like, the temperature of the friction surface between the friction material and the rotor does not easily rise. When the melting point of the wax A is 105°C or lower, the wax A softens or melts even under the braking conditions where the braking load is small, and the occurrence of the seizure due to corrosion phenomenon is likely to be prevented.

The content of the wax A in the entire friction material is preferably 0.2 mass% to 3.0 mass%, more preferably 0.5 mass% to 2.5 mass%, and still more preferably 1.0 mass% to 2.0 mass%. When the content of the wax A is 0.2 mass% or more, the occurrence of seizure due to corrosion can be prevented, and stable friction characteristics can be easily obtained even after the friction material is left in a low temperature and high humidity environment. When the content of the wax A is 3.0 mass% or less, thermal expansion of the friction material does not become too large.

(Other friction modifiers)

Other friction modifiers are used to impart desired friction characteristics such as abrasion resistance, heat resistance, and fade resistance to the friction material.

Examples of the other friction modifiers include an inorganic filler, an organic filler, an abrasive, and a solid lubricant.

Examples of the inorganic filler include inorganic materials such as a titanate, barium sulfate, calcium carbonate, calcium hydroxide, vermiculite, and mica, and metal powders of aluminum, tin and zinc. These inorganic fillers can be used alone or in combination of two or more thereof.

Since the titanate can form a friction film on the friction surface between the friction material and the rotor and impart relatively stable friction characteristics, the titanate is blended in the friction material in a relatively large amount from the viewpoints of heat resistance, effective stability, and abrasion resistance. Therefore, a relatively large amount of the titanate component is also present in the abrasion powder generated when the friction material and the rotor have friction against each other. The titanate is easily compatible with water due to a chemical structure thereof, i.e., a salt component. As described above, during regenerative cooperation braking with a small friction load, it is difficult to discharge the wear powder generated when the friction material and the rotor have friction against each other. Therefore, the abrasion powder tends to remain at an interface between the friction material and the rotor, and the particles of the abrasion powder are further finely ground by repeated braking with a small load. The finely ground abrasion powder containing a large amount of the titanate has high hygroscopicity and is easily influenced by moisture to form the abrasion powder aggregate. It is considered that when braking is performed in a state where such a abrasion powder aggregate is present at the friction interface between the friction material and the rotor, a shearing force becomes stronger due to the strongly agglomerated abrasion powder, and the braking force of the brake becomes too high, causing an abnormal effect.

However, in the present invention, as described above, since the abrasion powder can be coated with the wax A, the influence of the moisture on the abrasion powder generated by braking can be prevented even when the titanate is used, and stable friction characteristics can be obtained even after the friction material is left in a low temperature and high humidity environment.

When the titanium is used, the content of the titanate in the entire friction material is preferably 5 mass% to 30 mass%, more preferably 10 mass% to 25 mass%, and still more preferably 15 mass% to 20 mass%.

Examples of the titanate include potassium titanate, lithium titanate, lithium potassium titanate, sodium titanate, calcium titanate, magnesium titanate, potassium magnesium titanate, and barium titanate. Among these, potassium titanate, potassium titanate, and potassium magnesium titanate are preferred, and potassium titanate is more preferred, from the viewpoint of improving the abrasion resistance.

Examples of the organic filler include various rubber powders (raw rubber powder, tire powder, etc.), cashew dust, tire tread, and melamine dust. These organic fillers can be used alone or in combination of two or more thereof.

Examples of the abrasive include alumina, silica, magnesia, zirconia, zirconium silicate, chromium oxide, triiron tetraoxide ($Fe_3O_4$), and chromate. These abrasives can be used alone or in combination of two or more thereof.

Examples of the solid lubricant include graphite, antimony trisulfide, molybdenum disulfide, tin sulfide, and polytetrafluoroethylene (PTFE). These solid lubricants can be used alone or in combination of two or more thereof.

The friction modifier is preferably used in an amount of 60 mass% to 85 mass%, and more preferably 65 mass% to 80 mass%, based on the entire friction material, from the viewpoint of sufficiently imparting the desired friction characteristics to the friction material.

<Binder>

As the binder, various commonly used binders can be used. Specific examples thereof include phenol resins, various elastomer-modified phenol resins, and thermosetting resins such as a melamine resin, an epoxy resin and a polyimide resin.

Examples of the elastomer-modified phenol resin include an acrylic rubber-modified phenolic resin, a silicone rubber-modified phenolic resin, and a nitrile rubber (NBR)-modified phenolic resin. These binders can be used alone or in combination of two or more thereof.

From the viewpoint of moldability of the friction material, the binder is preferably used in an amount of 6 mass% to 10 mass%, and more preferably 7 mass% to 9 mass%, based on the entire friction material.

<Fiber Base Material>

As the fiber base material, various commonly used fiber base materials can be used. Specific examples thereof include an organic fiber, an inorganic fiber, and a metal fiber.

Examples of the organic fiber include an aromatic polyamide (aramid) fiber and a flame-resistant acrylic fiber.

Examples of the inorganic fiber include a biosoluble inorganic fiber, a ceramic fiber, a glass fiber, a carbon fiber, and rock wool. Among these, a biosoluble inorganic fiber is preferred from the viewpoint of having little influence on the human body. Examples of the biosoluble inorganic fiber include biosoluble ceramic fibers such as a $SiO_2$-CaO-MgO-based fiber, a $SiO_2$-CaO-MgO-$Al_2O_3$-based fiber, a $SiO_2$-MgO-SrO-based fiber, and biosoluble rock wool.

Examples of the metal fiber include a steel fiber. These fiber base materials can be used alone or in combination of two or more thereof.

From the viewpoint of ensuring sufficient strength of the friction material, the fiber base material is preferably used in an amount of 6 mass% to 12 mass%, and more preferably 7 mass% to 11 mass%, based on the entire friction material.

The content of a copper component in the entire friction material of the present invention is preferably 0.5 mass% or less, and more preferably the copper component is not contained, from the viewpoint of reducing the environmental load.

<Method for Producing Friction Material>

The friction material of the present invention can be produced by a known production process. For example, the friction material can be produced by blending the above components, and subjecting the blended material to steps such as preforming, hot molding, heating, and grinding according to a usual production method.

A method for producing a brake pad provided with the friction material generally includes the following steps.

(a) a step of forming a pressure plate into a predetermined shape by using a sheet metal press

(b) a step of applying a degreasing treatment, a chemical conversion treatment and a primer treatment to the pressure plate and coating the pressure plate with an adhesive

(c) a step of blending raw materials such as a friction modifier, a binder and a fiber base material, sufficiently homogenizing by mixing, and performing molding at a predetermined pressure at room temperature to prepare a preformed body

(d) a hot molding step of integrally fixing the preformed body and the pressure plate coated with the adhesive by applying a predetermined temperature and pressure (molding temperature: 130°C to 180°C, molding pressure: 30 MPa to 80 MPa, molding time: 2 minutes to 10 minutes), and

(e) a step of performing after-cure (150°C to 300°C, 1 hour to 5 hours) and finally performing finishing treatments such as grinding, scorching, and painting.

[Examples]

The present invention will be specifically described by way of the following Examples, but the present invention is not limited thereto.

(Examples 1 to 9 and Comparative Example 1)

Compounding materials shown in Table 2 are collectively charged into a mixer and mixed at room temperature for 2 to 10 minutes to obtain a friction material. The obtained friction material is subjected to the following steps of (i) preforming, (ii) hot molding, and (iii) heating to produce a brake pad provided with the friction material.

(i) Preforming

The friction material is charged into a mold of a preforming press and molded at room temperature at 20 MPa for 10 seconds to prepare a preformed product.

(ii) Hot molding

The preformed product is charged into a hot molding mold, metal plates (pressure plates) coated with an adhesive in advance are stacked, and hot compression molding is performed at 150°C and 40 MPa for 5 minutes.

(iii) Heating

The hot-compression molded product is heat-treated at 200°C to 250°C for 3 hours and then grinded.

Next, the surface of the heat-compression molded product is scorched and finished with a painting to obtain a brake pad provided with the friction material.

The corrosion stiction property and the friction coefficient stability of the brake pad provided with the friction material obtained in each of Examples 1 to 9 and Comparative Example 1 are evaluated according to the following methods.

<Corrosion Stiction Property>

The brake pad obtained above and a cast iron rotor are installed in an automobile that uses a built-in disc brake on rear wheels.

The following operation is performed on the first day of the evaluation of the corrosion stiction property.

(1) Burnish: braking for 100 times at a speed of 50 km/h, a deceleration of 1.96 m/s$^2$, and a pad initial brake temperature (IBT) of 50°C or lower

(2) Watering: at 15 L/min for 3 minutes

(3) Braking for 3 times with creep

(4) Using a parking brake with 7 notches and leave the parking brake outdoors for 18 hours

(5) Confirming sticking

(6) Setting the operation Nos. (1) to (5) as one day and repeating the operations every day.

On the 4th day, the 11th day, and 14th day (leaving for 3 nights from the 11th day to the 14th day) of the test, the sound pressure of the actual vehicle at the time of creep start is measured by setting a microphone on a passenger seat headrest. The results are shown in Table 2.

The sound pressures measured on the 4th, 11th, and 14th days of the test are evaluated based on the following criteria. The results are shown in Table 2.

A: less than 50 dB or no sticking
B: 50 dB or more and less than 60 dB
C: 60 dB or more and less than 70 dB
D: 70 dB or more or creep cannot be started

The above "no sticking" means that there is no noise when the friction material and the rotor corrosion-sticking to each other on the friction surface therebetween are peeled off from each other.

<Change in Average Friction Coefficient during Wetting (Simulated Dew Condensation) after Leaving at Low Temperature and High Humidity>

Using the obtained brake pad, an evaluation is carried out using a full-size dynamometer based on the test conditions shown in Table 1 below.
The average friction coefficient under a braking condition 1, the average friction coefficient under a braking condition 2 after being left for 8 hours, and the average friction coefficient under a braking condition 3 after spraying with water spray are compared. The rate of change in the average friction coefficient after being left at low temperature and high humidity and after spraying with water spray is calculated according to the following formulas and evaluated based on the following criteria. The results are shown in Table 2.
For the purpose of simulating the state of dew condensation, 3 mL of water spray is sprayed on each of an inner friction surface and an outer friction surface.

[Table 1]

| No. | Item | Environment condition | Initial brake temperature [°C] of disc rotor | Initial speed [km/h] | Final speed [km/h] | Control | | Number [times] of braking |
|---|---|---|---|---|---|---|---|---|
| | | | | | | Deceleration [m/s$^2$] | Hydraulic pressure [MPa] | |
| 1 | Burnish | 10°C, 40% | 60 | 40 | 3 | 1.5 | - | 1000 |
| 2 | Braking condition 1 | 10°C, 40% | 30 or less | 10 | 0 | - | 0.5, 1.0, 1.5, 2.0 | One time at each hydraulic pressure |
| 3 | Leaving for 8 hours | 10°C, 80% | - | - | - | | - | - |
| 4 | Braking condition 2 | 10°C, 80% | 30 or less | 10 | 0 | | 0.5, 1.0, 1.5, 2.0 | One time at each hydraulic pressure |
| 5 | Spraying with water spray | 10°C, 80% | - | - | - | | - | - |
| 6 | Braking condition 3 | 10°C, 80% | 30 or less | 10 | 0 | | 0.5, 1.0, 1.5, 2.0 | One time at each hydraulic pressure |

[Math. 1]

$$\text{RATE OF CHANGE [\%] IN AVERAGE FRICTION COEFFICIENT AFTER BEING LEFT AT LOW TEMPERATURE AND HIGH HUMIDITY} = \frac{\text{(AVERAGE FRICTION COEFFICIENT UNDER BRAKING CONDITION 2 - AVERAGE FRICTION COEFFICIENT UNDER BRAKING CONDITION 1)}}{\text{AVERAGE FRICTION COEFFICIENT UNDER BRAKING CONDITION 2}} \times 100$$

$$\text{RATE OF CHANGE [\%] IN AVERAGE FRICTION COEFFICIENT AFTER SPRAYING WITH WATER SPRAY} = \frac{\text{(AVERAGE FRICTION COEFFICIENT UNDER BRAKING CONDITION 3 - AVERAGE FRICTION COEFFICIENT UNDER BRAKING CONDITION 1)}}{\text{AVERAGE FRICTION COEFFICIENT UNDER BRAKING CONDITION 3}} \times 100$$

A: less than ±5%
B: ±5% or more and less than ±10%
C: ±10% or more and less than ±15%
D: ±15% or more

[Table 2]

| Blending composition | Friction modifier | Camauba wax (melting point: 86°C) | Example 1 | Example 2 | Example 3 | Example 4 | Example 5 | Example 6 | Example 7 | Example 8 | Example 9 | Comparative Example 1 |
|---|---|---|---|---|---|---|---|---|---|---|---|---|
| | | Camauba wax (melting point: 86°C) | 0.2 | 1.0 | 2.0 | 3.0 | 4.0 | - | - | - | - | - |
| | | Rice wax (melting point: 84°C) | - | - | - | - | - | 0.2 | 1.0 | 2.0 | 3.0 | - |
| | | Potassium titanate | 20.0 | 20.0 | 20.0 | 20.0 | 20.0 | 20.0 | 20.0 | 20.0 | 20.0 | 20.0 |
| | | Barium sulfate | 27.8 | 27.0 | 26.0 | 25.0 | 24.0 | 27.8 | 27.0 | 26.0 | 25.0 | 28.0 |
| | | Cashew dust | 4.0 | 4.0 | 4.0 | 4.0 | 4.0 | 4.0 | 4.0 | 4.0 | 4.0 | 4.0 |
| | | Tire tread | 3.0 | 3.0 | 3.0 | 3.0 | 3.0 | 3.0 | 3.0 | 3.0 | 3.0 | 3.0 |
| | | Graphite | 7.0 | 7.0 | 7.0 | 7.0 | 7.0 | 7.0 | 7.0 | 7.0 | 7.0 | 7.0 |
| | | Tin sulfide | 3.0 | 3.0 | 3.0 | 3.0 | 3.0 | 3.0 | 3.0 | 3.0 | 3.0 | 3.0 |
| | | Calcium hydroxide | 3.0 | 3.0 | 3.0 | 3.0 | 3.0 | 3.0 | 3.0 | 3.0 | 3.0 | 3.0 |
| | | Mica | 4.0 | 4.0 | 4.0 | 4.0 | 4.0 | 4.0 | 4.0 | 4.0 | 4.0 | 4.0 |
| | | Triiron tetraoxide | 5.0 | 5.0 | 5.0 | 5.0 | 5.0 | 5.0 | 5.0 | 5.0 | 5.0 | 5.0 |
| | | Zirconium silicate | 5.0 | 5.0 | 5.0 | 5.0 | 5.0 | 5.0 | 5.0 | 5.0 | 5.0 | 5.0 |
| | | Zinc powder | 2.0 | 2.0 | 2.0 | 2.0 | 2.0 | 2.0 | 2.0 | 2.0 | 2.0 | 2.0 |
| | Binder | Phenol resin | 8.0 | 8.0 | 8.0 | 8.0 | 8.0 | 8.0 | 8.0 | 8.0 | 8.0 | 8.0 |
| | Fiber base material | Aramid fiber | 4.0 | 4.0 | 4.0 | 4.0 | 4.0 | 4.0 | 4.0 | 4.0 | 4.0 | 4.0 |
| | | Biosoluble inorganic fiber | 4.0 | 4.0 | 4.0 | 4.0 | 4.0 | 4.0 | 4.0 | 4.0 | 4.0 | 4.0 |
| Total | | | 100.0 | | | | | | | | | |

| | | | | Example 1 | Example 2 | Example 3 | Example 4 | Example 5 | Example 6 | Example 7 | Example 8 | Example 9 | Comparative Example 1 |
|---|---|---|---|---|---|---|---|---|---|---|---|---|---|
| Evaluation | Actual vehicle | Sticking confirmation evaluation /sound pressure [dB] (at creep start) | 4th day | 50.5 | No sticking | No sticking | No sticking | No sticking | 51.1 | No sticking | No sticking | No sticking | 55.3 |
| | | | 11th day | 60.7 | 51.2 | 48.5 | No sticking | No sticking | 63.7 | 51.6 | 49.5 | No sticking | 69 |
| | | | 14th day (leaving for 3 nights) | 68.3 | 53.4 | 51.8 | 49.4 | 48.2 | 69.1 | 53.2 | 52.2 | 49.8 | No creep start |
| | Dynamo | Rate of change [%] in average friction coefficient after being left at low temperature and high humidity | | 12.1 | 9.9 | 8.5 | 3.8 | 3.8 | 11.7 | 9.7 | 8.3 | 4.1 | 15.8 |
| | | Rate of change [%] in average friction coefficient after being left at low temperature and high humidity + spraying with water spray | | 14.9 | 11.7 | 8.9 | 4.8 | 4.3 | 14.7 | 11.5 | 8.5 | 4.8 | 21.6 |

EP 3 943 570 A1

| Determination | | | Example 1 | Example 2 | Example 3 | Example 4 | Example 5 | Example 6 | Example 7 | Example 8 | Example 9 | Comparative Example 1 |
|---|---|---|---|---|---|---|---|---|---|---|---|---|
| | Sticking confirmation evaluation (at creep start) | 4th day | B | A | A | A | A | B | A | A | A | B |
| | | 11th day | C | B | A | A | A | C | B | A | A | C |
| | | 14th day (leaving for 3 nights) | C | B | B | A | A | C | B | B | A | - |
| | Rate of change in average friction coefficient after being left at low temperature and high humidity | | C | B | B | A | A | C | B | B | A | C |
| | Rate of change in average friction coefficient after being left at low temperature and high humidity + spraying with water spray | | C | C | B | A | A | C | C | B | A | D |

As seen from the results in Table 2, the friction materials according to Examples 1 to 9 can prevent the occurrence of the seizure due to corrosion phenomenon as compared with the friction materials according to Comparative Example 1, and have stable friction characteristics after being left in a low temperature and high humidity environment and in a dew condensation state.

Although the present invention has been described in detail with reference to a specific embodiment, it will be apparent to those skilled in the art that various changes and modifications can be made without departing from the spirit and the scope of the present invention. The present application is based on a Japanese Patent Application (Japanese Patent Application No. 2019-53712) filed on March 20, 2019, and the content thereof is incorporated herein as reference.

**Claims**

1. A friction material for disc brake, comprising: a wax containing, as a main component, an ester of a higher fatty acid and a higher alcohol.

2. The friction material for disc brake according to claim 1, wherein the wax has a melting point of 65°C to 105°C.

3. The friction material for disc brake according to claim 1 or 2, further comprising: a titanate.

**INTERNATIONAL SEARCH REPORT**

| International application No. |
| --- |
| PCT/JP2020/011571 |

**A. CLASSIFICATION OF SUBJECT MATTER**
C09K 3/14(2006.01)i; F16D 69/02(2006.01)i
FI: C09K3/14 520Z; F16D69/02 B

According to International Patent Classification (IPC) or to both national classification and IPC

**B. FIELDS SEARCHED**

Minimum documentation searched (classification system followed by classification symbols)
C09K3/14; F16D69/02

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
CAplus/REGISTRY (STN)

**C. DOCUMENTS CONSIDERED TO BE RELEVANT**

| Category* | Citation of document, with indication, where appropriate, of the relevant passages | Relevant to claim No. |
| --- | --- | --- |
| X | JP 01-307528 A (MITSUBISHI GAS CHEMICAL CO., INC.) 12.12.1989 (1989-12-12) claims, examples | 1-3 |
| X | JP 06-184524 A (HITACHI CHEMICAL INDUSTRY CO., LTD.) 05.07.1994 (1994-07-05) claims, examples | 1-3 |
| X | JP 52-086436 A (FERRO CORPORATION) 18.07.1977 (1977-07-18) claims, examples, page 7, lower right column | 1-3 |
| X | JP 10-220507 A (STARLITE CO., LTD.) 21.08.1998 (1998-08-21) claims, examples, paragraph [0001] | 1-3 |
| X | JP 2006-125618 A (NISSIN KOGYO CO., LTD.) 18.05.2006 (2006-05-18) claims, examples, paragraph [0001] | 1-3 |

☐ Further documents are listed in the continuation of Box C.   ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 29 May 2020 (29.05.2020) | 16 June 2020 (16.06.2020) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2020/011571

| Patent Documents referred in the Report | Publication Date | Patent Family | Publication Date |
|---|---|---|---|
| JP 01-307528 A | 12 Dec. 1989 | DE 68922436 T2<br>US 4944373 A<br>claims, examples<br>EP 344778 A2 | |
| JP 06-184524 A | 05 Jul. 1994 | (Family: none) | |
| JP 52-086436 A | 18 Jul. 1977 | BR 7600741 A<br>US 4002592 A<br>claims, examples,<br>column 6, lines 55-64<br>CA 1088239 A<br>DE 2604754 A1<br>ES 445181 A1<br>FR 2300106 A1<br>GB 1523062 A<br>IT 1054841 B<br>MX 4299 E<br>SE 7601332 A<br>US 3959208 A | |
| JP 10-220507 A | 21 Aug. 1998 | (Family: none) | |
| JP 2006-125618 A | 18 May 2006 | (Family: none) | |

Form PCT/ISA/210 (patent family annex) (January 2015)

**EP 3 943 570 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017025286 A
- JP 2015093933 A
- JP 2019053712 A